# EUROPEAN PATENT APPLICATION

(11) **EP 2 236 471 A1**
(43) Date of publication of application: **06.10.2010**
(21) Application number: 09003255.8
(22) Date of filing: 06.03.2009
(51) Int. Cl.: C03C 8/00, C23D 5/00, F24C 15/00

(54) **Enamel coating, coated article and method of coating an article**

(71) Applicant: Electrolux Home Products Corporation N.V., 1930 Zaventem (BE)
(72) Inventor: Fich Pedersen, Thomas, 91541 Rothenburg o. d. Tauber (DE); Wiesinger, Richard, 91608 Geslau (DE)
(74) Representative: Hochmuth, Jürgen

(57) **Abstract**

The invention in particular relates to an enamel coating (7) for coating a metal surface (5) of an article (3). For obtaining a surface roughness suitable for adequately bonding further coating layers (8) requiring mechanical bonding interactions, the enamel coating (7) comprises a mixture of a catalytic enamel and at least one of a normal enamel and pyrolytic enamel.

## Description

The present invention relates to an enamel coating, a coated article and a method of coating an article.

Providing coating layers on metal surfaces is known in the field of cooking or baking appliances such as cooking or baking trays or muffles of baking ovens. Inter alia, such coatings aim at providing resistant and easy to clean surfaces, especially in the field of cooking and baking appliances. The aforementioned coating layers usually are applied by techniques that require a mechanical bonding interaction between the respective surface and the coating material used. For example, ceramic coatings applied by thermal spray techniques do not establish a chemical bonding but rather are bonded mechanically to the respective surface.

For enhancing or enabling satisfactory mechanical bonding between the surface to be coated and the coating material it is required that the surface to be coated is sufficiently rough. In order to obtain surfaces sufficiently rough for establishing adequate mechanical bonding interactions it is often required to additionally roughen respective surfaces, particularly when coating metal surfaces.

Mechanical treatment techniques for additionally roughening surfaces, as for example sandblasting or grit blasting, are known. Especially when applying such mechanical treatment techniques to thin and mechanically instable articles, such as thin metal sheets, there is the danger of deforming or even damaging the article.

Further it is known to roughen the surface by applying chemical substances, for example by putting the articles in chemical baths for etching or phosphatising. However such chemical substances may require thorough subsequent cleaning to remove possible chemical remnants.

It is an object of the invention to provide an alternative way for obtaining surfaces having a surface roughness required to establish adequate mechanical bonding interactions with protective or easy to clean coatings or coating materials. Further, an article inter alia having such a surface and a method inter alia for obtaining such a surface is provided.

The object of the invention is solved by claims 1, 5 and 9. Advantageous embodiments result from respective dependent claims.

In a first aspect of the invention, an enamel coating for coating a metal surface of an article is provided. The enamel coating comprises a mixture of a catalytic enamel and at least one of a normal enamel and pyrolytic enamel.

Within the scope of the invention, the term "a catalytic enamel" shall comprise all types of enamel able to produce catalytic effects when exclusively applied to a metal surface. The term "a pyrolytic enamel" shall comprise all types of enamel able to produce pyrolytic effects when exclusively applied to a metal surface. The term "a normal enamel" shall comprise all types of enamel except for catalytic and pyrolytic enamels according to the aforementioned definitions. Note that pyrolytic and catalytic enamels are used with cooking and/or baking appliances, especially baking muffles of baking appliances. Appliances having pyrolytic or catalytic enamel layers make it possible to remove dirt resulting from steam, baking or cooking remnants, for example, via self cleaning processes making use of pyrolytic or catalytic effects.

In general, layers of exclusively normal or pyrolytic enamel show very smooth and glassy surfaces. Such smooth and glassy surfaces are generally not suitable for applying additional coating materials, such as ceramic coatings, which require a higher surface roughness to firmly bind to the surface via mechanical bonding interactions. Catalytic enamels have extremely rough surfaces with very large specific surface areas required for catalytic processes to take place. This is however to the other extreme precluding catalytic enamel layers from being used as substrates for self cleaning or easy to clean coating layers either.

According to the invention, an enamel coating comprising a mixture of catalytic enamel and at least one of normal and pyrolytic enamel is provided. Such an enamel coating has a surface roughness between that of normal or pyrolytic enamel and catalytic enamel. The surface roughness thus obtained is suitable for establishing adequate mechanical bonding interactions required for a variety of additional coatings, particularly ceramic coatings.

From the viewpoint of mechanical impacts exerted on the article, applying the enamel coating is quite a gentle method as compared to mechanical roughening techniques, such as sandblasting or grid blasting. This is of particular advantage with thin and mechanically instable articles, such as thin metal plates or sheets, since it is possible to generate rough surfaces without the danger of the article to be deformed. Further, drawbacks observed with roughening techniques using chemical baths, as for example phosphatising or etching, can be avoided.

The final surface roughness of the enamel coating can be easily adjusted and adapted to respective requirements by varying the percentage of catalytic enamel and at least one of normal and pyrolytic enamel. A variety of additional coatings require a surface roughness in the range of 2 to 8 µm which can be achieved using the enamel coating according to the first aspect. By adequately selecting the percentage of catalytic, normal and pyrolytic enamel the surface roughness can be tuned to 2 to 5 µm, suitable for certain ceramic coatings, and to 2 to 3 µm, particularly suitable for certain nanostructured ceramic coatings. Note that the surface roughness is given according to the mean roughness index (Rₐ).

A surface roughness in the range of 2 to 8 µm, covering the range suitable for bonding ceramic coatings, can for example be obtained by using an enamel coating comprising a mixture of at least one of between 5 to 50 per cent by volume of catalytic enamel and between 50 and 95 per cent by volume of at least one of normal and pyrolytic enamel.

Comparatively thin layers of enamel coating in the range of 10 to 50 µm, especially on metal surfaces, may be sufficient to attain a surface roughness in the desired range.

A second aspect of the invention is related to an article. The article has a metal surface at least partially being coated with an enamel coating according to the first aspect of the invention. By providing the proposed enamel coating, a surface roughness required for mechanically bonding an additional coating can be provided in a comparatively easy way, preventing mechanical disruption of the article. Further, the surface roughness can be easily adapted to respective needs. This is of particular advantage if the enamel coated article is to be coated with an additional, for example ceramic, coating providing an easy to clean surface, for example. For further advantages reference is made to details discussed in connection with the first aspect of the invention.

The metal surface of the article can be part of a sheet, i.e. the article can have a sheet like geometry or basically be of metal sheet like design, or a sheet like section of the article. As already mentioned, mechanical impacts and related deformations and disruptions are greatly avoided when applying the enamel coating to the article in order to generate a desired surface roughness. Therefore it is possible to use metal sheets and metal sheet like sections having a thickness of 2 mm or even less. This means that the overall geometry, particularly the overall surface geometry of the article will not be disrupted, which is of particular importance if strict manufacturing tolerances have to be observed or if outer appearance of the article is of major importance.

The enamel coated article, or at least the section of the article being enamel coated can be coated with a further or additional coating requiring mechanical bonding interactions. As the enamel coating guarantees adequate surface roughness for mechanical bonding, the additional coating can be firmly and reliably bonded to the enamel coating. Additional coatings may provide easy to clean or self cleaning surfaces. Such surfaces may be obtained by using ceramic coatings or nanostructured ceramic coatings. The term "nanostructured" shall mean that the ceramic coating has structures, preferably surface structures, in the nano-scale range. Nanostructured surfaces are known in the context of shelf cleaning effects. Note that apart from ceramic coatings, any additional coating or nanostructured coating requiring mechanical bonding can be applied as well.

The proposed way for generating a predefined surface roughness is universal. It can in principle be applied to a variety of articles. In particular, the article can be a cooking and/or baking appliance or baking tray suitable for household or industrial use respectively. In particular, the article can be a muffle of a baking oven, for household or industrial application for example. In the case of muffles, the coatings can be applied to the inner walls of the muffle. Particularly with regard to the aforementioned articles and particularly in connection with facilitating cleaning of the articles after use, it is of increasing interest to provide easy to clean or self cleaning surfaces. The invention provides fundamentals for producing such surfaces in a comparatively easy way open for large-scale production even for thin-walled articles and articles with reduced mechanical rigidity.

According to a third aspect of the invention, a method of at least partially coating a metal surface of an article is provided. The proposed method comprises the steps of:
- preparing an enamel coating material by mixing a catalytic enamel and at least one of a normal and pyrolytic enamel; and
- producing an enamel coating by applying the enamel coating material to at least a predefined portion of the metal surface.

The method provides a possibility to generate surfaces having a roughness to mechanically bond additional coating materials, such as ceramic coating materials. Advantageously, mechanical impacts on the article occurring with state of the art roughening methods such as sandblasting or grid blasting can be avoided. Further, chemical baths used for phosphatising or etching can be circumvented. The proposed method is universal and susceptible to large-scale industrial production. Additional advantages are readily apparent from details given in connection with the first and second aspect of the invention.

Following the proposals according to the first and second aspect of the invention and referring to respective advantages and advantageous effects, embodiments of the method are as follows:

The step of preparing the enamel coating material can comprise the step of adding at least one of 5 to 50 per cent by volume of catalytic enamel and 50 to 95 per cent by volume of at least one of normal and pyrolytic enamel.

Further, a percentage of the catalytic enamel and at least one of the normal and pyrolytic enamel can be selected such that a final surface roughness of the enamel coating is in the range of 2 to 8 µm, preferably 2 to 5 µm, preferably 2 to 3 µm.

The enamel coating material can be applied such that a resulting thickness of the enamel coating is between 10 to 50 µm.

In processing the enamel coating, the enamel coating applied to the metal surface can be fired at temperatures up to 850 °C. In particular, state of the art processes using firing temperatures from 800 to 850 °C can be used at least for firing the proposed enamel coating material. Therefore, the proposed method can easily be implemented with known firing and enamel coating methods without being forced to specific adaptation. However, some degree of adaptation may still be necessary, depending inter alia on the characteristics of the enamel coating material.

In a further step of the method, a ceramic coating, preferably a nanostructured ceramic coating, can be applied to the enamel coating, preferably after firing the latter. The ceramic coating or nanostructured ceramic coating thus applied can be fired at temperatures in the range of 200 to 300 °C. The ceramic coatings can be applied by thermal spraying, plasma spraying, High Velocity Oxygen Fuel (HVOF) spraying or other suitable techniques. Note that the additional coating is not restricted to ceramic materials. Other materials can be chosen according to respective needs. For example, any adequate material for providing easy to clean, hard, scratch resistant surfaces and the may be considered. Further, it is possible to use slurry spray techniques to apply the nanostructured coating. In this case, the coating can be applied in that a, preferably wet, suspension of the coating material is applied by spraying. Firing or sintering in this case may be done in a temperature range between 180 °C and 340 °C.

Embodiments of the invention will be described with reference to the drawings, in which
- FIG 1: shows a section of a household baking oven; and
- FIG 2: shows a sectional view of an enlarged portion of a muffle wall of the baking oven of Fig. 1.

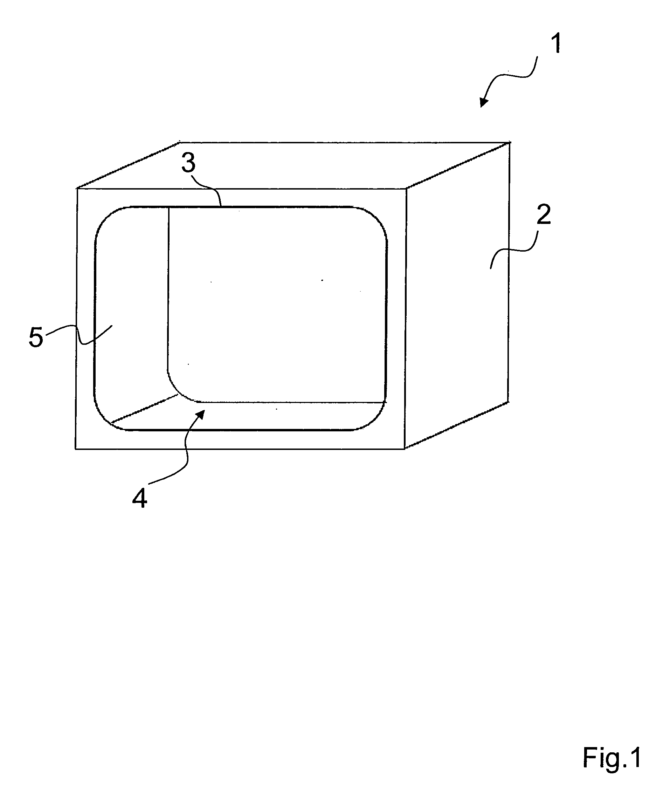

FIG 1 shows a section 1 of a household baking oven. Details of the baking oven, such as the oven's door and manual operating elements and the like, not necessarily required for fully understanding the invention have been omitted. This shall however not limit the scope of the invention.

Section 1 comprises a housing 2 surrounding a muffle 3 of the baking oven. The muffle 3 constitutes a cavity for receiving, via a front opening 4, food items to be baked or roasted. In general, inner surfaces 5 of side, bottom, top and back muffle walls become soiled during baking or roasting the food item due to steam, liquid splashes, food remnants and the like.

Comparatively high temperatures prevailing during baking processes lead to tenacious dirt sticking to the inner surfaces 5 of the muffle 3. Cleaning the inner surfaces 5 is therefore cumbersome, the more so as the inner surfaces 5 of the muffle 3 generally are difficult to access. It is therefore desirable to provide easy to clean, dirt resistant inner surfaces 5 or even surfaces having self cleaning properties.

Such surfaces can be obtained by coating the muffle walls with appropriate materials, for example. One possibility is to provide a ceramic or nanostructured ceramic coating. Such coatings - inter alia - are bonded to a substrate via mechanical bonding interactions. In order to establish a stable, firm and permanent bonding, the surface of the substrate must be sufficiently rough for properly establishing mechanical interaction between the substrate surface and the coating material.

Muffles 3 of baking ovens are generally made from thin metal sheets. The surface roughness of the metal sheets used is generally not adequate to establish proper mechanical interaction. Therefore, it is known to roughen the surface of the metal sheets by sandblasting, grid blasting, phosphatising or etching. The known techniques however have several disadvantages as already discussed in more detail above.

One goal of the invention is to provide an alternative to the known techniques. According to the invention, a substrate suitable for adequate mechanical bonding can be produced by using a mixture of certain enamels, which will be described in more detail below.

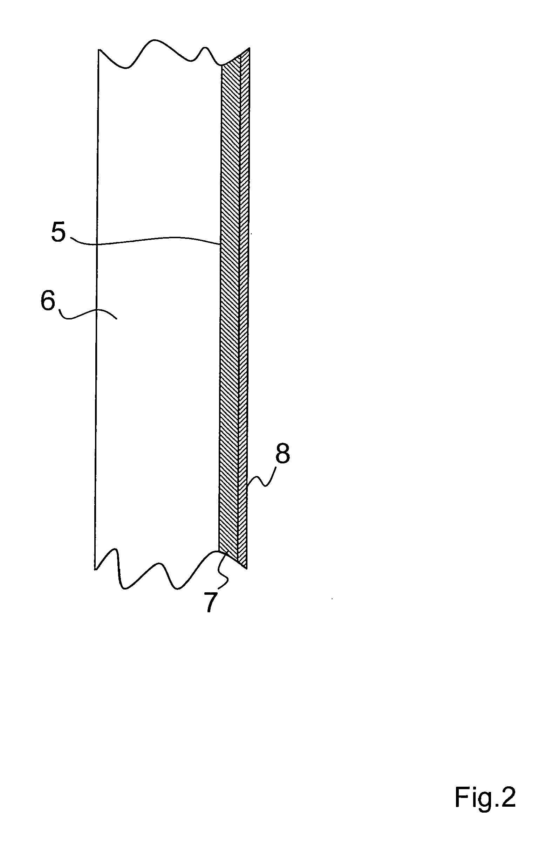

FIG 2 shows a sectional view of an enlarged portion of a metal sheet muffle wall 6 of the muffle 3. Note that Fig. 2 is not true to scale. The inner surface 5 is coated with an enamel coating 7. The enamel coating 7 in turn is coated with a ceramic coating 8, preferably a nanostructured ceramic coating.

The enamel coating 7 comprises a mixture of catalytic enamel and a normal enamel. Instead of the normal enamel or in addition to the normal enamel, a pyrolytic enamel can be used. In the present case, the percentage of catalytic enamel and normal enamel is selected such that the surface roughness of the enamel coating 7 is in the range of 2 to 5 µm. Such surface roughness is an excellent basis for establishing adequate mechanical bonding to ceramic coating 8.

The surface roughness of the enamel coating 7 is a result of mixing the two types of enamel. If applied alone, normal enamel, and likewise pyrolytic enamel, generally leads to very smooth, glassy surfaces which are not sufficiently rough to establish adequate mechanical bonding to the ceramic coating 8. Catalytic enamel however leads to extremely rough surfaces with a very large specific surface if applied alone, not suitable for establishing adequate mechanical bonding either. The inventors have recognized, that a mixture comprising both catalytic enamel and normal enamel, and - as the case may be - pyrolytic enamel, leads to a surface roughness above that.of normal or pyrolytic enamel and below that of catalytic enamel. Further, it has been found that the overall surface roughness of the enamel coating 7 can be adjusted by varying the percentage of catalytic enamel and normal enamel, and - as the case may be - pyrolytic enamel. This is of particular advantage, as the surface roughness of the enamel coating 7 can easily be adjusted to the bonding characteristics of the ceramic coating 8.

By varying the percentage of the two types of enamel the surface roughness can be adjusted in the range of 2 to 8 µm, for example. For certain nanostructured ceramic coatings, a surface roughness of 2 to 3 µm is required, which can be obtained by accordingly choosing the percentage of each of the different enamel types. For example, a percentage of catalytic enamel may lie in the range of 5 to 50 per cent by volume. Accordingly, a percentage of normal enamel, and - as the case may be - pyrolytic enamel, may lie in the range of 50 to 95 per cent by volume.

The enamel coating 7 can be applied to the muffle wall 6 using standard techniques, and fired at temperatures in the range of 800 to 850 °C, but also at lower temperatures. The enamel coating 7 can be applied such that a resulting thickness is in the range of 10 to 50 µm. Such enamel coatings 7 generally are sufficient for bonding ceramic coatings 8. Other ranges pertaining to the thickness of the enamel coating 7 are possible. It is possible to choose the layer thickness according to respective needs that may result from the type of coating material to be applied to the enamel coating 7, rigidity and other criteria.

The ceramic coating 8, or - as the case may be - a nanostructured ceramic coating, can be applied to the enamel coating 7 by appropriate techniques, such as thermal spraying, plasma spraying, High Velocity Oxygen Fuel (HVOF) spraying and others. Firing of ceramic coatings can take place at temperatures in the range of 200 to 300 °C. Further, it is possible to use slurry spray techniques to apply the nanostructured coating. In this case, the coating can be applied in that a, preferably wet, suspension of the coating material is applied by spraying. Firing or sintering in this case may be done in a temperature range between 180 °C and 340 °C.

Although the invention has been described in connection with a muffle 3 of a household baking oven, the invention is not restricted to that kind of cooking appliance. Rather, the invention can be applied to all articles to be provided with a coating requiring mechanical bonding interactions. For example all kind of cooking or baking appliances or utensils, cookware and the like, having a surface suitable for applying the enamel coating according to the invention may be contemplated.

From the discussion and explanations given above it becomes obvious that the object of the invention is achieved by the invention as set out in the claims.

### List of reference numerals

- 1: section of a baking oven
- 2: housing
- 3: muffle
- 4: front opening
- 5: inner surface
- 6: muffle wall
- 7: enamel coating
- 8: ceramic coating

## Claims

1. Enamel coating (7) for coating a metal surface (5) of an article (3), the enamel coating (7) comprising a mixture of a catalytic enamel and at least one of a normal enamel and pyrolytic enamel.

2. Enamel coating (7) according to claim 1, a percentage of the catalytic enamel and at least one of the normal and pyrolytic enamel being selected such that a surface roughness of the enamel coating (7) is in the range of 2 to 8 µm, preferably 2 to 5 µm, preferably 2 to 3 µm.

3. Enamel coating (7) according to at least one of claims 1 and 2, the mixture comprising at least one of between 5 to 50 per cent by volume of catalytic enamel and between 50 and 95 per -cent by volume of at least one of normal and pyrolytic enamel.

4. Enamel coating (7) according to at least one of claims 1 to 3, having a layer thickness between 10 to 50 µm.

5. Article (3) comprising a metal surface (5), the metal surface (5) being at least partially coated with an enamel coating (7) according to at least one of claims 1 to 4.

6. Article (3) according to claim 5, the metal surface (5) being part of a sheet or of a sheet like section (6) of the article (3), the metal sheet and the metal sheet like section (6), respectively, preferably having a maximum thickness of 2 mm.

7. Article (3) according to at least one of claims 5 and 6, the outer surface of the enamel coating (7) being coated with a further coating, preferably a ceramic coating (8), preferably a nanostructured ceramic coating.

8. Article (3) according to at least one of claims 5 to 7, the article (3) being selected from the group comprising a cooking and/or baking appliance, preferably household cooking and/or baking appliance, a baking tray, a muffle of a baking oven, preferably of a household baking oven.

9. Method of at least partially coating a metal surface (5) of an article (3), the method comprising the steps of
- preparing an enamel coating material by mixing a catalytic enamel and at least one of a normal and pyrolytic enamel; and
- producing an enamel coating (7) by applying the enamel coating material to at least a predefined portion (6) of the metal surface (5).

10. Method according to claim 9, the step of preparing the enamel coating material comprising the step of adding at least one of 5 to 50 per cent by volume of catalytic enamel and 50 to 95 per cent by volume of at least one of normal and pyrolytic enamel.

11. Method according to at least one of claims 9 and 10, wherein a percentage of the catalytic enamel and at least one of the normal and pyrolytic enamel is selected such that a surface roughness of the enamel coating (7) is in the range of 2 to 8 µm, preferably 2 to 5 µm, preferably 2 to 3 µm.

12. Method according to at least one of claims 9 to 11, the enamel coating material being applied such that a resulting thickness of the enamel coating (7) is in the range of 10 to 50 µm.

13. Method according to at least one of claims 9 to 12, the enamel coating (7) being fired at temperatures up to 850 °C, preferably at temperatures in the range of 800 to 850 °C.

14. Method according to at least one of claims 9 to 13, comprising the further step of applying a ceramic coating (8), preferably a nanostructured ceramic coating, to the enamel coating (7), the ceramic coating (8) preferably being fired at temperatures in the range of 200 to 300 °C, the step of applying the ceramic coating (8) being preferably selected from the group comprising thermal spraying, particularly plasma spraying, and High Velocity Oxygen Fuel spraying.

15. Method according to at least one of claims 9 to 13, comprising the further step of applying a ceramic coating (8), preferably a nanostructured ceramic coating, to the enamel coating (7), the ceramic coating (8) preferably being fired at temperatures in the range of 180 to 340 °C, the ceramic coating (8) being applied by slurry spray techniques.
